# EUROPEAN PATENT APPLICATION

(11) **EP 4 840 827 A1**
(43) Date of publication of application: **18.11.2026**
(21) Application number: 25305687.3
(22) Date of filing: 14.05.2025
(51) Int. Cl.: C02F 1/56, C02F 11/122, C02F 103/26, C02F 103/32, C02F 11/125, C02F 1/38

(54) **TREATMENT OF EFFLUENTS WITH HIGH SOLID CONTENT AND HIGH CONDUCTIVITY**

(71) Applicant: SNF SA, 42160 Andrezieux-Bouthéon (FR)
(72) Inventor: Duchadeau, Aurélien, 42160 ANDRÉZIEUX-BOUTHÉON (FR); Tavernier, Bruno, 42160 ANDRÉZIEUX-BOUTHÉON (FR)
(74) Representative: Plasseraud IP

(57) **Abstract**

The present invention relates to a method for separating liquid from solids in an aqueous effluent E having a solids content higher than 50 g.L⁻¹ and a conductivity higher than 10 000 µS.cm⁻¹. The method implements a water-soluble polymer with an average molecular weight over 1 million Daltons, containing at least 1 mol% of a hydrophilic zwitterionic monomer.

## Description

### Field of the invention

The present invention concerns a method for the liquid-solid separation of an effluent with high solids content (>50 g.L⁻¹) and high conductivity (> 10 000 µS.cm⁻¹) during thickening, settling or dewatering step. The industrial application can be the flocculation of sludge from the anaerobic digestion of agricultural waste (methanization), the flocculation of municipal sludge diluted with seawater or any application requiring solid-liquid separation on an effluent with the above characteristics.

### Background of the invention

High molecular weight polyelectrolytes like polyacrylamides become ineffective as flocculants in high conductivity environments due to high ion content preventing proper polymer deployment. One solution is using low molecular weight and low ionic polymers, but they lack the chemistry for effective solid/liquid separation. Another solution is introducing specific chemical functions to improve polymer resistance to high conductivity, such as introducing primary amine functions in the polymer chain.

JP3719531 outlines using polyvinylamine and polyvinylamidine to flocculate high conductivity sludge. This process requires N-vinylalkylamide monomers, which are scarce and costly, along with a polymer hydrolysis step that adds complexity and expense.

JP2022021368 describes a polymer inverse emulsion where primary amine functions are introduced via an acrylic monomer. This method has drawbacks, such as low active matter concentration (usually less than 50%) and the presence of oil in the emulsion's continuous phase, which can be problematic for some applications.

International patent application WO2009/115290 outlines the combined use of dicyandiamide-formaldehyde condensate and polyacrylamide in proportions of at least 10/1. Dicyandiamide-formaldehyde condensates, as defined in the patent application, are small polymers consisting of up to 150 units. This necessitates very high dosages to effectively achieve solid-liquid separation. The examples provided specify 15 kg of condensate per m³ of effluent, or 15 000 ppm, whereas treatment rates typically observed with polyacrylamide-type flocculants are a few hundred ppm.

A method is needed to efficiently flocculate effluents with high solid content and high conductivity using a low polymer dosage, preferably with polymer in particulate form.

### Description of the invention

The present invention describes a method for separating liquid from solids in effluents with high solids content (>50 g.L⁻¹) and high conductivity (>10000 µS/cm). It involves treating the effluent with a water-soluble polymer with an average molecular weight over 1 million Daltons, containing at least 1 mol% of a zwitterionic monomer.

This method allows to decrease dosage of polymer for an efficient solid separation of an effluent and to obtain a water sufficiently clean to be recycled in a process (example: methanization).

More precisely, the invention is a method for separating liquid from solids in an aqueous effluent **E** with high solids content (> 50 g.L⁻¹) and high conductivity (> 10 000 µS/cm), the method comprising at least the following successive steps:
(a) adding to the aqueous effluent **E** at least one water-soluble polymer **P**, the said polymer **P** containing at least 1 mol% of at least one hydrophilic zwitterionic monomer;
(b) Stirring the aqueous treated effluent obtained in step a) to obtain a suspension **S;**
(c) Performing a liquid/solid separation of the **S** suspension to obtain an aqueous solution **L** free form solid particulates.

By "polymer" we mean a homopolymer prepared from one type of monomer, or a copolymer prepared from at least two different types of monomers.

The polymers **P** used in the process of the invention have (independently of each other) each a molecular weight greater than 1 million Daltons, more preferably between 1 and 40 million Daltons, even more preferably between 1 and 30 million Daltons, even more preferably between 2 and 20 million Daltons, and even more preferably between 3 and 10 million Daltons. Molecular weight is defined as weight average molecular weight.

Molecular weight is determined by the intrinsic viscosity of the polymer. Intrinsic viscosity can be measured by methods known to those skilled in the art and can be calculated from reduced viscosity values for different polymer concentrations by a graphical method consisting of plotting reduced viscosity values (y-axis) against concentration (x-axis) and extrapolating the curve to zero concentration. The intrinsic viscosity value is plotted on the y-axis or using the least-squares method. The molecular weight can then be determined by the Mark-Houwink equation: $\left[η\right] = K {M}^{α}$ [η] represents the intrinsic viscosity of the polymer as determined by the solution viscosity method.

K is an empirical constant.

M represents the molecular weight of the polymer.

α represents the Mark-Houwink coefficient.

K and α depend on the particular polymer-solvent system.

By "water-soluble polymer", we mean a polymer which gives an aqueous solution without insoluble particles when dissolved with stirring at 25°C and a concentration of 10 g.L⁻¹ in deionized water.

By "hydrophilic monomer" is meant a monomer which has its coefficient, log(Kow), less than or equal to 1, wherein Kow is the octanol/water partition and is determined at 25°C in an octanol/water mixture having a volume ratio of 1/1, at a pH of between 6 and 8.

The octanol-water partition coefficient, Kow, represents the ratio of concentrations (g/L) of a monomer between the octanol phase and the aqueous phase. It is defined as follows: ${K}_{ow} = \frac{{\left[monomer\right]}_{octanol}}{{\left[monomer\right]}_{eau}}$

In the entire specification, viscosities are measured with a Brookfield viscometer, at 25°C in aqueous solution.

In this specification, it is considered that the person skilled in the art is able to determine the Brookfield viscometer module and speed suitable according to the viscosity range to be measured. Indeed, this type of measurement is part of the general knowledge of the person skilled in the art.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20. All the particular and/or preferred embodiments described in the invention are combinable, provided they are not incompatible.

Polymer P contains at least 1 mol% of at least one hydrophilic zwitterionic monomer.

Hydrophilic zwitterionic monomers have the particularity of having at least one anionic charge and at least one cationic charge on the same monomer unit. The cationic group is generally a quaternary ammonium. The anionic group is generally a salified form of a carboxylic acid, a sulfonic acid, a phosphoric acid or a phosphonic acid.

Preferably, polymer P comprises at least one hydrophilic zwitterionic monomer in the list of sulfobetaine compounds with a structure according to formule (I): 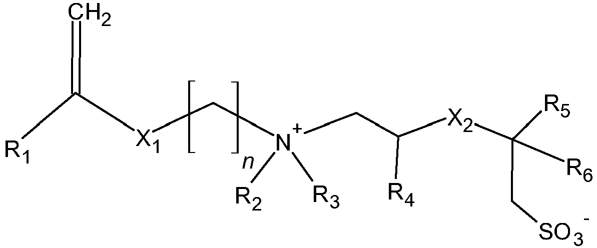 In formula (I):
R₁ and R₄ are, independently of each other, -H or -CH₃,
R₂ and R₃ are, independently of each other, linear C1-10 alkyl or branched C3-10 alkyl or linear C2-10 alkenyl,
R₅ is -H, linear Cl-C22 alkyl or branched C3-C22 alkyl, or R₅ forms an optionally branched C4-C10 carbon ring with R₆,
R₆ is a linear C l-C22 alkyl or branched C3-C22 alkyl group, or R₆ forms an optionally branched C4-C10 carbon ring with R₅,
X1= -COO-, or -CONH- or -CH₂-,
X2= -COO- or -CONH-,
n is an integer between 0 and 10.

More preferably, the sulfobetaine compound is 2-(3-((2-(acryloyloxy) ethyl) dimethylammonio) propanamido)-2-methylpropane-l-sulfonate.

Polymers **P** may comprise hydrophilic non-ionic monomers and/or anionic monomers and/or cationic monomers.
- The hydrophilic nonionic monomers are selected from the group consisting of:
   acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains.
- The hydrophilic anionic monomers are selected from the group consisting of acrylic acid, methacrylic acid, dimethylacrylic acid, itaconic acid, C1-C3 itaconic acid hemiesters, crotonic acid, maleic acid, fumaric acid, allylsulfonic acid, methallylsulfonic acid, 2-methylidenepropane-1,3-disulfonic acid, styrene sulfonic acid, 2-acrylamido-2-5 methylpropane sulfonic acid (ATBS), 2-acrylamido-2-methylpropane disulfonic acid, 3-allyloxy-2-hydroxypropane sulfonic acid, the salts thereof and mixtures thereof.
- The hydrophilic cationic monomers are selected from the group consisting of diallyldialkyl ammonium salts, such as diallyl dimethyl ammonium chloride (DADMAC); acidified or quaternized salts of dialkylaminoalkylacrylamides; acidified or quaternized salts of dialkyl-aminoalkylmethacrylamides, e.g. methacrylamido-propyl trimethyl ammonium chloride (MAPTAC), acrylamido-propyl trimethyl ammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof. Alkyl groups are C₁-C₃.

Water-soluble salts of hydrophilic anionic monomers are advantageously alkali metal (preferably sodium or potassium) or alkaline earth metal (preferably calcium or magnesium) or ammonium (preferably NH₄⁺) salts.

Preferably, the polymer **P** comprises hydrophilic zwitterionic monomers and hydrophilic non-ionic monomers and/or hydrophilic cationic monomers. More preferably, the polymer **P** comprises hydrophilic zwitterionic monomers and hydrophilic cationic monomers

The polymer **P** contains at least 1 mol% of at least one hydrophilic zwitterionic monomer, preferably at least 2 mol%, more preferably at least 3 mol% and more preferably at least 5 mol%. The polymer **P** contains between 1 and 100 mol% of at least one hydrophilic zwitterionic monomer, preferably between 1 and 75 mol%, more preferably between 1 and 50 mol%.

In a preferred embodiment, the polymer **P** contains between 1 and 50 mol% of hydrophilic zwitterionic monomers and 50 and 99 mol% of non-ionic monomers and/or between 20 and 50 mol% of hydrophilic cationic monomers.

Preferably, the non-ionic hydrophilic monomer is acrylamide, and cationic hydrophilic monomer is dimethylaminoethyl acrylate (ADAME) quaternized with methyl chloride.

Polymer **P** consists of hydrophilic monomer(s) and may comprise structuring agent(s). According to the invention, polymers **P** may have a linear, branched, star-shaped or comb-shaped structure. This structure can be obtained, according to the general knowledge of a person skilled in the art, for example by selecting the initiator, the transfer agent, the polymerization technique such as Reversible Addition Fragmentation chain Transfer (RAFT) polymerization, Nitroxide Mediated Polymerization (NMP) or Atom Transfer Radical Polymerization (ATRP), the incorporation of structuring compounds, or the concentration.

Polymers **P** may be structured by a structuring agent. By structured polymer is meant a non-linear polymer, for instance branched, star-shaped or comb-shaped structure. The structuring agent is advantageously chosen from:
- compounds chosen from polyethylenically unsaturated compounds (having, as a minimum, two unsaturated functions) different from the monomers previously described, like for example, vinyl functions, in particular, allylic or acrylic, and, for example, methylene bis acrylamide (MBA), triallylamine, tetraallylammonium chloride or 1,2 dihydroxyethylene bis-(N-acrylamide),
- compounds having at least two epoxy functions,
- compounds having at least one unsaturated function and an epoxy function,
- macro-initiators such as polyperoxides, polyazoics and transfer polyagents, such as polymercaptan polymers, and polyols,
- functionalized polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

The quantity of structuring agent in the polymer **P** is advantageously less than 1 000 ppm by weight relative to the total weight of the monomers of the polymer **P**, preferably less than 100 ppm by weight, and more preferably less than 10 ppm by weight.

Polymer **P** is water soluble and if it comprises at least one structuring agent, it remains water soluble. A person skilled in the art knows how to adjust the quantity of structuring agent and, possibly, the quantity of transfer agent needed to obtain this result.

Preferably, the polymer **P** is linear.

The polymer **P** may be in the form of an aqueous solution, an inverse emulsion (water-in-oil), an aqueous suspension, a powder or a dispersion of the polymer in oil. Polymer P is advantageously in the form of a powder or an inverse emulsion.

In general, the water-soluble polymer **P** does not require any development of a particular polymerization process. In fact, they can be polymerization techniques well known to those skilled in the art. of the art. These include solution polymerization; gel polymerization; polymerization by precipitation; emulsion polymerization (aqueous or inverse); suspension polymerization; reactive extrusion polymerization; water-in-water polymerization; or micellar polymerization.

Addition of polymer **P** in effluent **E,** is advantageously performed by injection of an aqueous solution of polymer **P** prepared upstream from polymer **P** in powder form.

Advantageously, for step a) of the method of the invention, between 5 and 50 kg.t⁻¹ of polymer **P** is added in effluent **E,** with t= ton of solid particulates in effluent **E.**

In another embodiment of the method of the invention, before or during step a) a water-soluble polymer **P'** with an average molecular weight between 20 000 and 1 million Dalton is added in the aqueous effluent **E.**

The optional polymers **P'** used in the process of the invention preferably have a molecular weight between 200 000 and 500 000 Daltons. Molecular weight is defined as weight average molecular weight.

The polymer **P'** is advantageously selected from poly(aluminum chloride), the product of the polycondensation reaction between epichlorohydrin and dimethylamine, homopolymers or copolymers of diallyldimethyl ammonium halide.

More preferably, polymer **P'** is a polycondensation reaction between epichlorohydrin and dimethylamine.

Polymer **P'** is in a form of an aqueous solution.

Preferably, between 5 and 50 kg.t⁻¹ of Polymer **P'** is added in effluent E, with t=ton of solid particles in effluent **E.**

For sake of clarity, when effluent **E** is first treated with a polymer **P',** said treated effluent **E** is the effluent that is secondly treated with polymer **P.** Polymers **P** and **P'** are preferably not added at the same time in the effluent **E.**

In another embodiment, polymer **P'** is added at the time as polymer **P** in step a) of the method of the invention.

Additions of polymers **P** and **P'** in effluent **E** are advantageously performed in-line. In other words, additions are performed in the pipe where effluent **E** is circulating. Preferably, alimentation points in polymer **P'** is located before alimentation in polymer **P.**

Advantageously, stirring of effluent **E** with polymer **P** and **P'** is performed by a static mixer added in the pipe where effluent **E** is circulating, after alimentation points of polymer **P** and **P'.**

In the method of the invention, for step c) liquid solid separation means is preferably a filtration on a screw press or a belt filter press or with a centrifuge.

The liquid **L** obtained by step c) is free from solid particulates. So, it contains no solid particles or has an insignificant quantity of solid particulates (less than 100 ppm, by weight of liquid).

Effluent **E** is characterized by a solid content higher than 50 g.L⁻¹, and by a conductivity higher than 10 000 µS.cm⁻¹. Generally, the effluent **E** derived from a previous process, in which it is considered as a waste product.

Preferably, effluent **E** is the liquid phase obtained after liquid/phase separation of the anaerobic digestion of an agricultural waste, also called methanization waste product. In this case, effluent **E** is advantageously characterized by a conductivity higher than 15 000 µS.cm⁻¹, more preferably higher than 20 000 µS.cm⁻¹.

This effluent **E** (from methanization waste product) has preferably a Chemical Oxygen Demand (COD) higher than 20 000 mg.L⁻¹, more preferably higher than 25 000 mg.L⁻¹

In another embodiment, the effluent **E** may also be a sludge from municipal sludge diluted with seawater.

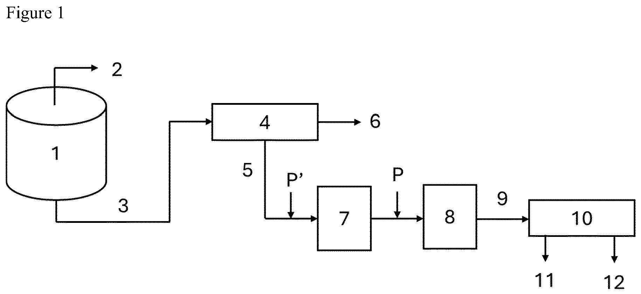

After methanization (anerobic digestion), the bio-digested waste has a high solid content comprising fibrous matter. After a solid/liquid phase separation, a liquid phase is obtained free from fibrous materials. This aqueous phase is the effluent **E** which is treated by the method of the invention (Figure 1).

Preferably solid/liquid phase separation of the bio-digested waste is performed by means of a screw press.

Solids content can be determined by drying an effluent sample (100 mL at 105°C) until a constant mass is obtained. This mass is the solid content.

Conductivity is measured using a Hach HQ 14D hand-held conductivity meter with a measurement range of 0.01 µS.cm⁻¹ - 200 mS.cm⁻¹ with an accuracy of 0.5% in the 1 µS.cm⁻¹ - 200 mS.cm⁻¹ range.

Chemical Oxygen Demand is the total amount of oxygen consumed by strong oxidants present in the effluent during the decomposition and chemical oxidation of organic/inorganic matter. A typical determination of the COD is to introduce an excess of the dichromate ion. After the reaction is completed the excess amount of dichromate is measured by titration with ferrous ammonium sulfate. COD is expressed in milligrams per liter (mg/L), which indicates the mass of oxygen consumed per liter of solution.

The invention and its advantages will be better illustrated by the following non-limiting figure and examples.

### Figures

[Fig. 1] Figure 1 illustrates a methanization process (anaerobic digestion) of an agricultural waste indicating effluent **E** and addition points for polymer **P** (and **P'**), in which **1** represents an anaerobic digestion tank, **2** represents biogas flux, **3** represents a raw digestate flux, **4** represents a 1^{st} separation unit, **5** represents an effluent **E** (liquid digestate, active material >5%, conductivity >10 000 µS.cm⁻¹), **6** represents solid (fibrous matter), **7** represents first mixing, **8** represents second mixing, **9** represents a suspension **S, 10** represents a 2^{nd} solid/liquid separation unit, **11** represents an aqueous solution **L,** and **12** represents a solid matter.

**[Examples]** Solid/Liquid separation was performed on different liquid digestates (**E**). Those liquid digestates are residues from anaerobic digestion of farm waste obtained after a first separation unit as illustrated on Fig 1. It contains a high solid matter fraction, over 50 g.L⁻¹ and its conductivity is very high, over 10 000 µS.cm⁻¹. Consequently, cationic polyacrylamides containing no hydrophilic zwitterionic monomer, generally used to flocculate those digestate prior to the solid/liquid 2^{nd} separation unit, are not efficient compared with polymer used in the process of the invention.

### Example 1:

Flocculation of liquid digestate issued from a mix of corn cob, food waste and manure containing 60 g.L⁻¹ of solid matter and presenting a conductivity of 28 500 µS.cm⁻¹ with polyacrylamide polymers of different monomeric compositions.

Table 1 summarizes compositions of tested polymers, all synthetized in powder form (gel polymerization) and diluted to 5g/L solutions (in water) prior to use.

**[Table 1]**

| Polymer **P** | Molar composition | | | | Molecular weight (million Da) | Remark |
|---|---|---|---|---|---|---|
| | AM | ADC | AA | MADAME-ATBS sulfobetaine | | |
| P0 | 65 | 35 | 0 | 0 | 3,9 | Comparative |
| P1 | 62 | 35 | 0 | 3 | 4,5 | Invention |
| P2 | 60 | 40 | 0 | 0 | 2,4 | Comparative |
| P3 | 55 | 40 | 5 | 0 | 7,7 | Comparative |

| | | | | | | |
|---|---|---|---|---|---|---|
| AM : acrylamide ADC : dimethylaminoethyl acrylate methyl chloride AA : acrylic acid MADAME-ATBS: 2-(3-((2-(acryloyloxy) ethyl) dimethylammonio) propanamido )-2-methylpropane-l-sulfonate | | | | | | |

Efficiency of solid/liquid separation is evaluated through two main parameters:
1) suspended solids (SS) capture rate which is obtained by dividing the quantity of suspended solids kept in solid fraction by the content in initial liquid digestate;
2) the drainage capacity of formed flocs, obtained by measuring the liquid volume released after 10 seconds through a standardized filter.

Results are summarized in Table 2.

**[Table 2]**

| Polymer **P** | Polymer dose (kg.t⁻¹) | SS Capture rate (%) | Filtrate volume (mL) |
|---|---|---|---|
| P1 | 33,8 | 85 | 51 |
| P1 | 35,2 | 86 | 61 |
| P0 | 42,2 | 88 | 31 |
| P3 | 35,6 | 85 | 49 |
| P3 | 38,7 | 85 | 46 |
| P2 | 37,0 | 86 | 26 |
| P2 | 45,8 | 85 | 26 |

All polymers give good capture rate, over 85%. There is no significant difference on that parameter. On the other hand, we can see big differences on drainage. P0 and P2 which are cationic polyacrylamide not bearing anionic functions release small amounts of water (below 40 mL).The amphoteric polymer P3 gives slightly better results with water release between 40 and 50 mL. Best performing polymer is the one according to the invention, containing 3 mol% of hydrophilic zwitterionic monomer. Not only, said polymer P1 can release up to 60 mL of water, but it is also the one requiring the smallest dosage compared with all others.

### Example 2

Flocculation of liquid digestate obtained from methanization of a mixture of cereals and manure. This liquid digestate contains 54 g.L⁻¹ of suspended solids; it has a conductivity of 21 500 µS.cm⁻¹ and Chemical Oxygen Demand (COD) is measured at 35 000 mg.L⁻¹. COD is a normalized method used to measure organic matter content in the sludge. During solid/liquid separation it is important to maximize the capture rate of organic matter to allow liquid fraction discharge in wastewater treatment plant or back into the anerobic digestion process to dilute the incoming matter.

Table 3 summarizes monomeric composition of tested polymers, all synthetized in powder form and diluted to 5 g.L⁻¹ solutions (in water) prior to use.

**[Table 3]**

| Polymer | Molar composition | | | Molecular weigth (million Da) | Remark |
|---|---|---|---|---|---|
| | AM | ADC | MADAME-ATBS Sulfobetaine | | |
| P4 | 80 | 20 | 0 | 6.5 | Comparative |
| P5 | 60 | 40 | 0 | 6.2 | Comparative |
| P6 | 77 | 20 | 3 | 5.9 | Invention |
| P7 | 77 | 0 | 23 | 5.4 | Invention |
| P8 | 60 | 35 | 5 | 6.3 | Invention |
| P9 | 50 | 45 | 5 | 6.4 | Invention |
| P10 | 55 | 0 | 45 | 5.5 | Invention |
| P11 | 20 | 0 | 80 | 4.5 | Invention |

Table 4 summarizes the results obtained with polymers of Table 3.

**[Table 4]:**

| Polymer | Dosage kg.t ⁻¹ | COD in liquid (mg.L⁻¹) | Filtrate volume (mL) |
|---|---|---|---|
| P4 | 35.7 | 4590 | 74 |
| P5 | 50.2 | 3260 | 53 |
| P6 | 33.7 | 2830 | 81 |
| P7 | 32.5 | 2650 | 78 |
| P8 | 46.0 | 764 | 64 |
| P9 | 48.2 | 791 | 55 |
| P10 | 45.5 | 770 | 58 |
| P11 | 66.7 | 765 | 35 |

In table 4, results obtained for cationic polymers P4, P6 and P7, emphasize that sludge flocculation with these polymers require the lowest dosages, below 40 kg.t⁻¹, and that these polymers drain the highest volume of liquid, over 70 mL after 10 s.

A significant decrease of COD in filtrate by using polymers P6 and P7 is observed (as described in the method of the invention), in comparison to use of polymer P4.

From polymers with high cationic monomer content, polymers containing sulfobetaines P8, P9 and P10 (as described in the method of the invention) improve drastically the organic matter capture rate, COD remaining below 1 000 mg.L⁻¹, by comparison with use of polymer P5. Filtrate volume is also increased. These polymers are well adapted to liquid digestate flocculation.

For polymer P11, a very good organic capture rate is observed, like the one obtained with polymers P8, P9 and P10. Even though the filtrate volume is reduced and polymer dosage increased (over 50 kg.t⁻¹), this type of polymer is efficient to perform solid/liquid separation on this liquid digestate.

### Example 3

Flocculation of liquid digestate obtained from methanization of a mixture of cereals and manure. This liquid digestate contains 54 g.L⁻¹ of suspended solids; it has a conductivity of 21 500 µS.cm⁻¹ and Chemical Oxygen Demand (COD) is measured at 35 000 mg.L⁻¹. Solid/liquid separation was performed by using polymers P0 or P1 (compositions described in Table 1), alone or in combination with a polymer P' (polycondensation product of epichlorohydrin and dimethylamine, average molecular weight 400 000 Daltons).

Polymer P0 and P1 were diluted to 5g.L⁻¹ solutions (in water) prior to use. Polymer **P'** was synthesized in water to obtain a polymer P' at a concentration of 50 weight % in water. P' was injected without dilution prior to flocculation. P' was added to the digestate before addition of P0 or P1.

Results are summarized in Table 5

**[Table5]**

| Polymer | Dosage kg.t⁻¹ | Polymer | Dosage kg.t ⁻¹ | COD in liquid (mg.L⁻¹) | Filtrate volume (mL) | Remark |
|---|---|---|---|---|---|---|
| P0 | 55 | | | 9000 | 80 | Comparative |
| P0 | 30 | P' | 30 | 4200 | 78 | Comparative |
| P1 | 42 | | | 2800 | 84 | Invention |
| P1 | 25 | P' | 25 | 2100 | 82 | Invention |

Combining polyamine P' with polymer P0 or P1, induces a drastic reduction of COD in the filtrate without affecting water release. It illustrates the benefit of adding the polymer P' prior the addition of a polymer P0 or P1 to condition the sludge.

Furthermore, use of polymer P1 increases solid/liquid separation performances in terms of COD and water release compared to P0, whatever used alone or in combination with P'.

## Claims

1. A method for separating liquid from solids in an aqueous effluent **E** having a solids content higher than 50 g.L⁻¹ and a conductivity higher than 10 000 µS/cm, the said method comprising at least the following successive steps:
(a) adding to the aqueous effluent **E** at least one water-soluble polymer **P,** said polymer **P** containing at least 1 mol% of at least one hydrophilic zwitterionic monomer;
(b) stirring the aqueous treated effluent obtained in step a) to obtain a suspension **S;**
(c) performing a liquid/solid separation of the **S** suspension to obtain an aqueous solution **L** free of solid particulates.

2. A method according to claim 1, wherein polymer **P** comprises at least one hydrophilic zwitterionic monomer in the list of sulfobetaine compounds with a structure according to formula (I): 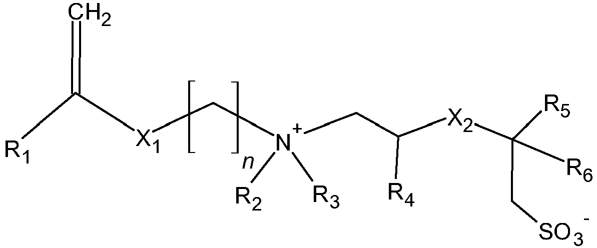 In formula (I):
R₁ and R₄ are, independently of each other, -H or -CH₃,
R₂ and R₃ are, independently of each other, linear C1-10 alkyl or branched C3-10 alkyl or linear C2-10 alkenyl,
R₅ is -H, linear Cl-C22 alkyl or branched C3-C22 alkyl, or R₅ forms an optionally branched C4-C10 carbon ring with R₆,
R₆ is a linear C l-C22 alkyl or branched C3-C22 alkyl group, or R₆ forms an optionally branched C4-C10 carbon ring with R₅,
X1= -COO-, or -CONH- or -CH₂-,
X2= -COO- or -CONH-,
n is an integer between 0 and 10.

3. Method according to claim 2 wherein sulfobetaine is 2-(3-((2-(acryloyloxy) ethyl) dimethylammonio) propanamido)-2-methylpropane-l-sulfonate

4. Method according to claim 1 to 3, wherein the polymer **P** contains between 1 and 50 mol% of hydrophilic zwitterionic monomer.

5. Method according to claim 1 to 4, wherein the polymer **P** comprises hydrophilic non-ionic and/or anionic and/or cationic monomers with:
- hydrophilic non-ionic monomers chosen in the list: acrylamide, methacrylamide, N-alkylacrylamides, N-alkylmethacrylamides, N,N-dialkyl acrylamides such as N,N-dimethylacrylamide or N,N-diethylacrylamide, N,N-dialkylmethacrylamides, alkoxylated esters of acrylic acid, alkoxylated esters of methacrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, glyceryl methacrylate, diacetone acrylamide, anyhydride methacrylic, acrylonitrile, anydride maleic, itaconamide, vinylpyridine, hydroxyalkyl (meth)acrylate, thioalkyl (meth)acrylate, isoprenol, alkoxylated derivatives of isoprenol, hydroxyethyl(meth)acrylates, alkoxylated derivatives of hydroxyethyl(meth)acrylates, hydroxypropylacrylate, alkoxylated derivatives of hydroxypropylacrylate, vinyl acetate, and mixtures thereof, the alkyl groups being C1-C3 hydrocarbon chains;
- hydrophilic anionic monomers chosen in the list: acrylic acid, methacrylic acid, dimethylacrylic acid, itaconic acid, C1-C3 itaconic acid hemiesters, crotonic acid, maleic acid, fumaric acid,allylsulfonic acid, methallylsulfonic acid, 2-methylidenepropane-1,3-disulfonic acid, styrene sulfonic acid, 2-acrylamido-2-5 methylpropane sulfonic acid (ATBS), 2-acrylamido-2-methylpropane disulfonic acid, 3-allyloxy-2-hydroxypropane sulfonic acid, the salts thereof and mixtures thereof;
- hydrophilic cationic monomers chosen in the list: diallyldialkyl ammonium salts, such as diallyl dimethyl ammonium chloride (DADMAC); acidified or quaternized salts of dialkylaminoalkylacrylamides; acidified or quaternized salts of dialkyl-aminoalkylmethacrylamides, e.g. methacrylamido-propyl trimethyl ammonium chloride (MAPTAC), acrylamido-propyl trimethyl ammonium chloride (APTAC), acidified or quaternized salts of dialkylaminoalkyl acrylate, such as quaternized or salified dimethylaminoethyl acrylate (ADAME), acidified or quaternized salts of dialkylaminoalkyl methacrylate, such as quaternized or salified dimethylaminoethyl methacrylate (MADAME), and mixtures thereof. Alkyl groups are C1-C3.

6. Method according to claim 1 to 5, wherein the polymer **P** comprises hydrophilic non-ionic monomers and/or hydrophilic cationic monomers.

7. Method according to claims 1 to 6; wherein the polymer **P** has an average molecular weight between 3 and 10 million Dalton.

8. Method according to claims 1 to 7, wherein for step a), between 5 and 50 kg.t⁻¹ of polymer **P** is added in effluent **E,** with t= ton of solid particulates in effluent **E.**

9. Method according to claims 1 to 8, wherein before step a) a water-soluble polymer **P'** with an average molecular weight between 20 000 and 1 million Dalton is added in the aqueous effluent **E.**

10. Method according to claim 9, wherein water-soluble polymer **P'** is a polycondensation product of epichlorohydrin and dimethylamine.

11. Method according to claims 1 to 10, wherein the liquid/solid separation of step c) is realized by filtration on a screw press or a belt filter press or with a centrifuge.

12. Method according to claims 1 to 11, wherein effluent **E** is the liquid phase obtained after liquid/phase separation of the anaerobic digestion of an agricultural waste.
